# EUROPÄISCHE PATENTANMELDUNG

(11) **EP 2 803 392 A1**
(43) Veröffentlichungstag der Anmeldung: **19.11.2014**
(21) Anmeldenummer: 13167604.1
(22) Anmeldetag: 14.05.2013
(51) Int. Cl.: A63B 22/02, A01K 15/02, A61H 35/00, A61M 35/00, A01K 1/01

(54) **Trainingsvorrichtung mit einem Laufband und Verfahren zur Beschichtung der Lauffläche eines Laufbandes**

(71) Anmelder: Jantnerne Olah, Ilona, 7030 Paks (HU)
(72) Erfinder: Oláh, Dániel, 2241 Sülysáp (HU)
(74) Vertreter: Garrels, Sabine

(57) **Zusammenfassung**

Die erfindungsgemäße Trainingsvorrichtung ist mit einem Laufband versehen, welches eine Beschichtung der Lauffläche aufweist. Sie dient dem Lauftraining insbesondere von Pferden, kann aber auch für andere Tiere oder Personen zur Anwendung kommen.

Aufgabe der Erfindung ist es, eine wiederverwendbare Beschichtung für ein Laufband zu entwickeln. Es sollen die Eigenschaften eines natürlichen Untergrundes nachempfunden werden.

Die Trainingsvorrichtung mit einem-Laufband besteht aus einem Endlosband, welches über Umlenkrollen geführt wird und mit einem Laufflächenmaterial versehen ist, und mindestens einer Rampe. Unterhalb eines oberen Endlosbandes ist ein zweites unteres Endlosband angeordnet, wobei sich zwischen dem oberen Endlosband und dem unteren Endlosband das Laufflächenmaterial befindet. Das Laufflächenmaterial wird durch den Druck der beiden Endlosbänder zueinander einer Kompression zugeführt und durch eine kontinuierliche, zueinander gegenläufige Bewegung der Endlosbänder auf der Oberseite des oberen Endlosbandes abgelegt.

## Beschreibung

Die erfindungsgemäße Trainingsvorrichtung ist mit einem Laufband versehen, welches eine Beschichtung der Lauffläche aufweist. Sie dient dem Lauftraining insbesondere von Pferden, kann aber auch für andere Tiere oder Personen zur Anwendung kommen.

Als Trainingsgeräte für das Lauftraining in geschlossenen Räumen sind Laufbänder bekannt. Es gibt Laufbänder für Menschen und für Tiere, insbesondere Pferde. Trainingsgeräte für Pferde bestehen in der Regel aus einem mit regelbarer Geschwindigkeit motorisch angetriebenen, trittfesten Laufband.

Ein derartiges Trainingsgerät für Pferde wird in DE 20215987 U1 offenbart. Das mittels Rollen abgestützte Laufband ist in einem ortsfesten Gestell angeordnet, das beidseits des Laufbandes Begrenzungswände hat.

Die Lauffläche eines Laufbandes ist im Allgemeinen nicht besonders nachgiebig. Dies führt zu einer übermäßigen Beanspruchung der Gelenke sowie Bänder, was Entzündungen, Reizungen und bleibende Schäden zur Folge haben kann.

Eine andere Trainingsvorrichtung für das Lauftraining mit einem endlosen Laufband wird in DE 29507631 U1 beschrieben, welche dieses Problem beheben soll. Die Trainingsvorrichtung besteht aus einem umlaufenden Laufband, das um zwei Umlenkrollen geführt wird. Weiterhin sind eine Zuführeinrichtung an einem Ende und eine Abführeinrichtung an dem anderen Ende des Laufbandes für ein auf das Laufband aufzubringendes Laufflächenmaterial angeordnet. Das Laufflächenmaterial besteht aus Sand, Kiesel, Lehm, zerhacktem Eis oder Granulat oder einer Kombination aus zwei oder mehreren Komponenten dieses Materials. Das Laufflächenmaterial wird von der Zuführeinrichtung auf das Laufband gestreut und wird durch dieses zu der Abführeinrichtung transportiert. Die Zuführeinrichtung ist mit der Abführeinrichtung über eine Speichereinrichtung verbunden. Das Laufflächenmaterial wird, nachdem es durch das Laufband transportiert wurde, durch eine Auffangeinrichtung aufgefangen und der Speichereinrichtung zugeleitet. Aus der Speichereinrichtung wird das Laufflächenmaterial mittels einer Hebeeinrichtung wieder der Zuführeinrichtung zugeleitet.

### Darstellung der Erfindung

Aufgabe der Erfindung ist es, eine wiederverwendbare Beschichtung für ein Laufband zu entwickeln. Es sollen die Eigenschaften eines natürlichen Untergrundes nachempfunden werden.

Die erfindungsgemäße Lösung wird in den Ansprüchen wiedergegeben.

Die Trainingsvorrichtung mit einem-Laufband besteht aus einem Endlosband, welches über Umlenkrollen geführt wird und mit einem Laufflächenmaterial versehen ist, und mindestens einer Rampe. Unterhalb eines oberen Endlosbandes ist ein zweites unteres Endlosband angeordnet, wobei sich zwischen dem oberen Endlosband und dem unteren Endlosband das Laufflächenmaterial befindet. Das Laufflächenmaterial wird durch den Druck der beiden Endlosbänder zueinander einer Kompression zugeführt und durch eine kontinuierliche, zueinander gegenläufige Bewegung der Endlosbänder auf der Oberseite des oberen Endlosbandes abgelegt.

Das untere Endlosband wird über drei Umlenkrollen geführt, wobei eine Umlenkrolle oberhalb des oberen Endlosbandes angeordnet ist, so dass das untere Endlosband einseitig über das Niveau des oberen Endlosbandes gehoben wird.

Der Abstand der Umlenkrollen für das untere Endlosband ist größer als der Abstand der Umlenkrollen für das obere Endlosband, so dass das untere Endlosband in seiner Länge unterhalb des oberen Endlosbandes hinausragt. So wird eine Möglichkeit geschaffen, das Laufflächenmaterial mit einfachen Mitteln zurückzugewinnen.

In einer Ausführungsform sind die Umlenkrolle am ablaufenden Ende des oberen Endlosbandes und die darunter liegende Umlenkrolle für das untere Endlosband fluchtend untereinander angeordnet. Ein Leitblech für das Laufflächenmaterial ist am ablaufenden Ende des oberen Endlosbandes so angeordnet, dass das Laufflächenmaterial vom oberen Endlosband auf das das untere Endlosband abgeführt wird.

In einer Ausführungsform ist zwischen den Umlenkrollen für das obere Endlosband eine Gleitplatte angeordnet, welche mit einer gedachten, auf diesen Umlenkrollen aufliegenden Tangente nach oben bündig abschließt. Die Gleitplatte ist mit einem selbstschmierenden Material beschichtet oder weist eine besonders glatte, nichthaftende Oberfläche auf. Die Oberfläche der Gleitplatte kann insbesondere mit Teflon beschichtet sein.

Die Rampe ist an der das Laufflächenmaterial abführenden Seite mit einem Gitterrost verbunden. Der Gitterrost wird in einer Ausführungsform mittels geeigneter Mittel in Vibration gebracht.

Das Laufflächenmaterial besteht aus einem Granulatgemisch. Das Granulatgemisch ist vorteilhafterweise eine Mischung aus Sand und anderen Komponenten. Die Komponenten können Häcksel, Späne, Fasern oder andere Materialien, sowie Wachs, Bindemittel, Vaseline oder Öl sein.

Das Verfahren zur Beschichtung der Lauffläche eines Laufbandes einer Trainingsvorrichtung mit einem Laufflächenmaterial, wobei das Laufband aus einem über Umlenkrollen geführten Endlosband besteht, hat folgende Schritte:
a. Einfüllen des Laufflächenmaterials in die Trainingsvorrichtung,
b. Kompression eines Teils des Laufflächenmaterials durch Druck zwischen einem oberen Endlosband (4) und einem unteren Endlosband (9),
c. Ablegen des verdichteten Laufflächenmaterials auf der Oberseite des oberen Endlosbandes (4) durch eine kontinuierliche, zueinander gegenläufige Bewegung des oberen Endlosbandes (4) und des unteren Endlosbandes (9),
d. Zurückführen des Laufflächenmaterials über das obere Endlosband (4) zum seinem entgegengesetzten Ende auf das untere Endlosband (9),
e. Kontrolle der Menge des Laufflächenmaterials über eine Minimum-Maximum-Anzeige,
f. Wiederholen der Schritte b) bis e) bis eine minimale Menge des Laufflächenmaterials unterschritten wird,
g. Wiederholen der Schritte a) bis f).

Der Abstand zwischen dem oberen Endlosband und dem unteren Endlosband bestimmt die Menge und die Dicke des Laufflächenmaterials.

In einer weiteren Ausführung wird die Menge des Laufflächenmaterials aus dessen Zusammensetzung und der daraus folgenden Kompressionsfähigkeit bestimmt. Das Laufflächenmaterial besteht aus einem Granulatgemisch. Das Granulatgemisch besteht aus Sand und anderen Komponenten.

Durch die erfindungsgemäße Ausführung der Vorrichtung und des Verfahrens kann ein Lauftraining auf einem weitgehend natürlichen Untergrund stattfinden. Die Zusammensetzung des Laufflächenmaterials hat einen entscheidenden Anteil an der Festigkeit der Lauffläche. Die bei herkömmlichen Vorrichtungen dieser Art auftretenden Probleme, wie eine übermäßige Beanspruchung der Gelenke sowie Bänder, werden beseitigt. Die erfindungsgemäße Vorrichtung kann auch für das Lauftraining von Personen dimensioniert werden, um sie beispielsweise im therapeutischen Bereich einzusetzen.

### Ausführung der Erfindung

Die Erfindung wird anhand von Zeichnungen näher erläutert. Hierzu zeigt
- Figur 1: eine schematische Darstellung der Trainingsvorrichtung,
- Figur 2: die Anordnung der Rampe mit Gitterrost an der das Granulatgemisch abführenden Seite.

Die erfindungsgemäße Trainingsvorrichtung wird an einem Beispiel zur Veranschaulichung für das Lauftraining für Pferde dargestellt. Die Dimensionierung ist so gewählt, dass sich ein Pferd bequem auf dem Laufband bewegen kann. Das Laufband ist Bestandteil einer Box für Pferde, wie sie aus dem Stand der Technik bekannt ist. Die Box umschließt das Pferd allseitig und kann auch mit einem Dach versehen sein. Ebenso können besondere aus dem Stand der Technik bekannte Mittel an der Pferdebox angeordnet oder mit ihr verbunden sein. Neben notwendigen Vorrichtungen, wie beispielsweise ein Antrieb für das Laufband, ist als eine mögliche zusätzliche Vorrichtung ein Münzautomat zur Betätigung des Laufbandes vorstellbar. Auch eine Auffangvorrichtung für die Exkremente am hinteren Ende der Box ist möglich.

Insbesondere können in der Pferdebox rechts und links vom Pferd sogenannte Magnetdecken, welche zum Abdecken der Pferde bereits bekannt sind, angeordnet werden. Die Magnetdecken bewirken eine Entspannung bzw. Lockerung der Muskulatur, so dass der Trainingseffekt verstärkt werden kann.

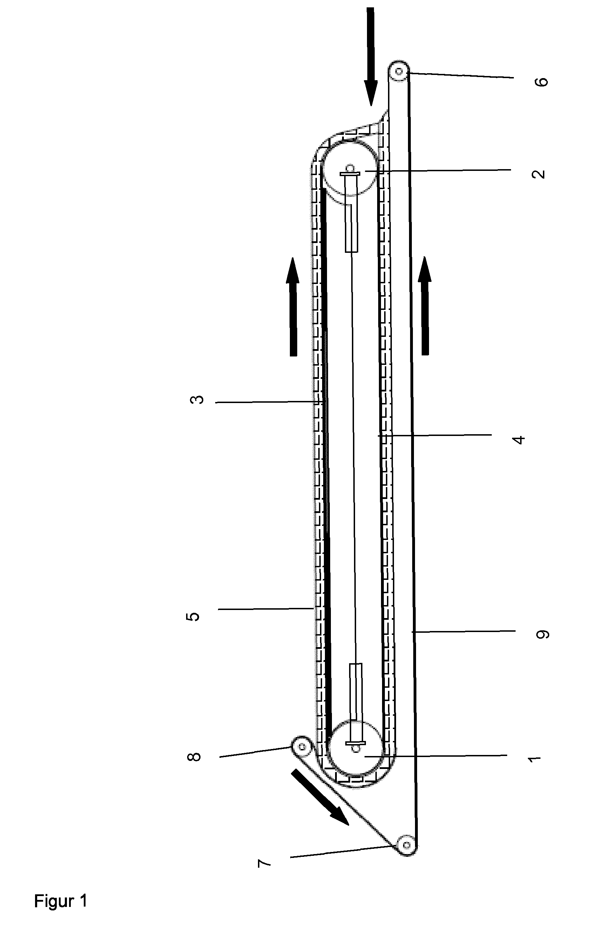

Die Erfindung umfasst im Wesentlichen ein Laufband, auf das ein Pferd über eine, in Figur 1 nicht weiter dargestellte, Rampe geführt und nach Absolvierung seines Trainings über eine weitere, nicht gezeigte Rampe wieder herabgeführt wird. Für das Training von anderen Tieren oder auch Personen kann das Laufband entsprechend dimensioniert werden.

Das Laufband in Figur 1 ist als Endlosband 4 ausgeführt und wird über zwei Umlenkrollen 1 und 2, die an den beiden Enden des Laufbandes angeordnet sind, geleitet. Der Antrieb der Umlenkrollen 1 und 2 erfolgt in bekannter Weise. Zwischen den Umlenkrollen 1 und 2 ist eine Gleitplatte 3 angeordnet, welche mit einer gedachten, auf den Umlenkrollen 1 und 2 aufliegende Tangente nach oben bündig abschließt. Die Gleitplatte 3 kann mit einer besonders glatten, nichthaftenden Oberfläche, wie beispielsweise Teflon, versehen sein. Über die Umlenkrollen 1 und 2 und die Gleitplatte 3 wird das obere Endlosband 4 geführt. So wird eine feste Trittfläche geschaffen. Das Endlosband 4 besteht aus einem für Laufbänder, insbesondere für Pferde, üblichen Material.

Unterhalb des umlaufenden, oberen Endlosbandes 4 und beabstandet von diesem befindet sich ein weiteres Paar Umlenkrollen 6 und 7, die in ihren Durchmessern kleiner sind, als die Umlenkrollen 1 und 2. Zwischen den Umlenkrollen 6 und 7 ist ebenfalls eine Gleitplatte 10 angeordnet. Ein zweites, unteres Endlosband 9 läuft über die Umlenkrollen 6 und 7 auf dieser Gleitplatte 10. Der Abstand der Umlenkrollen 6 und 7 ist größer als der Abstand der Umlenkrollen 1 und 2, so dass das untere Endlosband 9 unterhalb des oberen Endlosbandes 4 hinausragt. Der Abstand zwischen den Endlosbändern 4 und 9 liegt zwischen 2 und 10 cm, insbesondere zwischen 3 und 5 cm.

Oberhalb der Umlenkrolle 1 ist einseitig eine weitere, in ihrem Durchmesser kleinere Umlenkrolle 8 angeordnet, wobei die Mittelpunkte der Umlenkrollen 1 und 8 in einer senkrechten Achse stehen. Der Mittelpunkt der oberen Umlenkrolle 8 kann aber auch versetzt zum Mittelpunkt der Umlenkrolle 1 in Richtung Endlosband 4 angeordnet sein. Die Umlenkrolle 8 wird vorgespannt, so dass hier nochmals eine Einstellung der Pressung und der Dicke erfolgen kann. Das untere Endlosband 9 wird um die Umlenkrollen 6, 7 und 8 geführt und läuft in gegenläufiger Richtung zum Endlosband 4. Der Abstand zwischen den Endlosbändern 4 und 9 bleibt kontinuierlich gleich.

Zwischen dem oberen Endlosband 4 und dem unteren Endlosband 9 und unterhalb der Gleitplatte 3 und den Umlenkrollen 1 und 2 befindet sich das Laufflächenmaterial, welches aus einem Granulatgemisch 5, vorzugsweise einem Gemisch aus Sand und anderen Komponenten besteht. Durch den Druck der beiden Endlosbänder 4 und 9 auf das Granulatgemisch 5 wird dieses gepresst und durch die gegenläufige Bewegung der Endlosbänder 4 und 9 zueinander kontinuierlich in Richtung Umlenkrolle 8 weitergeführt. Das untere Endlosband 9 wird über die Umlenkrolle 8 über das Niveau des oberen Endlosbandes 4 gehoben. Der Abstand zwischen den Endlosbändern 4 und 9 verändert sich hierbei nicht. Das Granulatgemisch 5 wird im komprimierten Zustand um die Umlenkrolle 1 auf die obere Seite des Endlosbandes 4 gehoben und dort abgelegt. Die Laufschicht wird somit aus der Gleitplatte 3, dem Endlosband 4 und dem Granulatgemisch 5 gebildet.

Das Granulatgemisch 5 wird durch das obere Endlosband 4 bis zu seinem Ende an der Umlenkrolle 2 mitgeführt und fällt dort auf das untere Endlosband 9. Es ist auch vorstellbar, dass die Umlenkrolle 2 am ablaufenden Ende des oberen Endlosbandes 4 und die darunter liegende Umlenkrolle 6 für das untere Endlosband 9 fluchtend direkt untereinander angeordnet werden. Dann ist es erforderlich, dass ein Leitblech für das Granulatgemisch 5 am ablaufenden Ende des oberen Endlosbandes 4 angeordnet wird, damit das Granulatgemisch 5 vom oberen Endlosband 4 auf das das untere Endlosband 9 abgeführt werden kann. Von diesem wird das Granulatgemisch 5 für einen neuen Pressvorgang zwischen den Endlosbändern 4 und 9 zurückgeführt. Auf die Art erfolgt eine einfache und kostengünstige Rückgewinnung des Laufflächenmaterials. Es muss keine ständige Zuführung von Granulatgemisch 5 erfolgen.

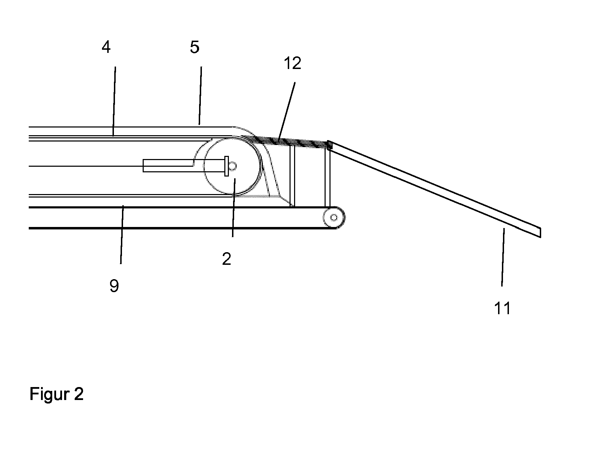

Figur 2 zeigt in einer Ausführungsform die Anordnung einer Rampe 11 an der das Granulatgemisch 5 abführenden Seite mit einem Gitterrost 12. Die Rampe 11 ist dem Endlosband 4 zugeordnet, so dass ein Pferd problemlos auf das Laufband geführt werden kann. Der Gitterrost 12 ist in Richtung Umlenkrolle 2 angeordnet. Das Granulatgemisch 5 fällt durch den Gitterrost 12 auf das untere Endlosband 9. So kann verhindert werden, dass Verunreinigungen, u.a. die Exkremente, mit dem Granulatgemisch 5 verpresst werden und die Konsistenz desselben verändern. Die Verunreinigungen werden vom Gitterrost 12 in eine Richtung rechts oder links neben das Laufband abgeleitet.

Durch Vibration des Gitterrosts 12 mit dafür geeigneten Mitteln, wie beispielsweise einem kleinen Rüttler, kann eine noch effektivere Trennung von Granulatgemisch 5 und Verunreinigungen erfolgen und das Granulatgemisch wird zusätzlich aufgelockert. Die Vibration des Gitterrosts 12 kann außerdem auch als therapeutische Maßnahme für das Pferd genutzt werden. Werden wahlweise die Vorder- oder die Hinterhufe auf den Gitterrost 12 gestellt, trägt dies zur besseren Durchblutung und zur Muskellockerung bei.

Die Laufschicht hat die Eigenschaften eines natürlichen Untergrundes und ist relativ fest. Das Granulatgemisch 5 ist relativ feinkörnig und besteht vorzugsweise aus einem Gemisch aus Sand und anderen Komponenten. Für die Komponenten kommen Häcksel, Späne, Fasern, beispielsweise Gummistücke, Korkspäne oder andere ähnliche Materialien in Frage. Ebenso kann eine Beimischung von Wachs, Bindemittel, Vaseline oder Öl erfolgen. Die Öle können beispielsweise auf den Huf eines Pferdes positiv wirkende Öle sein. Bei einem Laufband für Personen sind auch medikamentöse Zusätze vorstellbar. Auch die Zumischung von Duftstoffen, keimmindernde oder keimtötende Mittel ist möglich. Durch die Zusammensetzung des Granulatgemischs 5 kann die Festigkeit des Laufuntergrundes beeinflusst werden. So kann beispielsweise das Granulatgemisch 5 so gewählt werden, dass ein Lauftraining auf einem sandigen Untergrund erfolgt, wie es in Reithallen üblich ist. Auch ist ein festerer Untergrund denkbar, welcher eine Wiese simulieren kann. Beimengungen von Medikamenten oder pflegerischen Zusätzen zum Granulatgemisch 5 sind möglich.

Das Granulatgemisch 5 wird in der Regel und je nach Benutzungsdauer komplett erneuert. Die Verluste am Granulatgemisch 5 durch die Pferdebewegung werden überwacht. So kann beispielsweise eine Minimum-Maximum-Anzeige dem Anwender signalisieren, wann das Granulatgemisch 5 gewechselt werden muss.

Da es sich bei der vorhergehenden, detailliert beschriebenen Trainingsvorrichtung mit einem-Laufband um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Trainingsvorrichtung in anderer Form als in der hier beschriebenen folgen. Ebenso kann die Trainingsvorrichtung in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

## Patentansprüche

1. Trainingsvorrichtung mit einem-Laufband, bestehend aus einem Endlosband, welches über Umlenkrollen geführt wird und mit einem Laufflächenmaterial versehen ist, und mindestens einer Rampe,
**dadurch gekennzeichnet, dass**
unterhalb eines oberen Endlosbandes (4) ein zweites unteres Endlosband (9) angeordnet ist, wobei sich zwischen dem oberen Endlosband (4) und dem unteren Endlosband (9) das Laufflächenmaterial befindet, welches durch den Druck der beiden Endlosbänder (4 und 9) zueinander einer Kompression zugeführt wird und durch eine kontinuierliche, zueinander gegenläufige Bewegung der Endlosbänder (4 und 9) auf der Oberseite des oberen Endlosbandes (4) abgelegt wird.

2. Trainingsvorrichtung nach Anspruch 1 **dadurch gekennzeichnet, dass** das untere Endlosband (9) über drei Umlenkrollen (6, 7 und 8) geführt wird, wobei eine Umlenkrolle (8) oberhalb des oberen Endlosbandes (4) angeordnet ist, so dass das untere Endlosband (9) einseitig über das Niveau des oberen Endlosbandes (4) gehoben wird.

3. Trainingsvorrichtung nach Anspruch 1 oder 2 **dadurch gekennzeichnet, dass** der Abstand der Umlenkrollen (6 und 7) für das untere Endlosband (9) größer als der Abstand der Umlenkrollen (1 und 2) für das obere Endlosband (4) ist, so dass das untere Endlosband (9) in seiner Länge unterhalb des oberen Endlosbandes (4) hinausragt.

4. Trainingsvorrichtung nach Anspruch 1 oder 2 **dadurch gekennzeichnet, dass** die Umlenkrolle (2) am ablaufenden Ende des oberen Endlosbandes (4) und die darunter liegende Umlenkrolle (6) für das untere Endlosband (9) fluchtend direkt untereinander angeordnet sind und ein Leitblech für das Laufflächenmaterial am ablaufenden Ende des oberen Endlosbandes (4) so angeordnet ist, dass das Laufflächenmaterial vom oberen Endlosband (4) auf das untere Endlosband (9) abgeführt wird.

5. Trainingsvorrichtung nach Anspruch 1 **dadurch gekennzeichnet, dass** zwischen den Umlenkrollen (1 und 2) für das obere Endlosband (4) eine Gleitplatte (3) angeordnet ist, welche mit einer gedachten, auf diesen Umlenkrollen (1 und 2) aufliegenden Tangente nach oben bündig abschließt.

6. Trainingsvorrichtung nach Anspruch 5 **dadurch gekennzeichnet, dass** die Gleitplatte (3) eine besonders glatte, nichthaftende Oberfläche aufweist.

7. Trainingsvorrichtung nach Anspruch 6 **dadurch gekennzeichnet, dass** die Oberfläche der Gleitplatte (3) mit Teflon beschichtet ist.

8. Trainingsvorrichtung nach Anspruch 1 **dadurch gekennzeichnet, dass** die Rampe (11) an der das Laufflächenmaterial abführenden Seite mit einem Gitterrost (12) verbunden ist.

9. Trainingsvorrichtung nach Anspruch 8 **dadurch gekennzeichnet, dass** der Gitterrost (12) mittels geeigneter Mittel in Vibration gebracht wird.

10. Trainingsvorrichtung nach Anspruch 1 **dadurch gekennzeichnet, dass** das Laufflächenmaterial aus einem Granulatgemisch (5) besteht.

11. Trainingsvorrichtung nach Anspruch 8 **dadurch gekennzeichnet, dass** das Granulatgemisch (5) aus Sand und anderen Komponenten besteht.

12. Trainingsvorrichtung nach Anspruch 9 **dadurch gekennzeichnet, dass** das Granulatgemisch (5) aus Sand und Häcksel, Späne, Fasern oder andere ähnliche Materialien, sowie Wachs, Bindemittel, Vaseline oder Öl besteht.

13. Verfahren zur Beschichtung der Lauffläche eines Laufbandes einer Trainingsvorrichtung mit einem Laufflächenmaterial, wobei das Laufband aus einem über Umlenkrollen geführten Endlosband besteht,
mit den Schritten:
a) Einfüllen des Laufflächenmaterials in die Trainingsvorrichtung,
b) Kompression eines Teils des Laufflächenmaterials durch Druck zwischen einem oberen Endlosband (4) und einem unteren Endlosband (9),
c) Ablegen des verdichteten Laufflächenmaterials auf der Oberseite des oberen Endlosbandes (4) durch eine kontinuierliche, zueinander gegenläufige Bewegung des oberen Endlosbandes (4) und des unteren Endlosbandes (9),
d) Zurückführen des Laufflächenmaterials über das obere Endlosband (4) zum seinem entgegengesetzten Ende auf das untere Endlosband (9),
e) Kontrolle der Menge des Laufflächenmaterials über eine Minimum-Maximum-Anzeige,
f) Wiederholen der Schritte b) bis e) bis eine minimale Menge des Laufflächenmaterials unterschritten wird,
g) Wiederholen der Schritte a) bis f).

14. Verfahren nach Anspruch 13 **dadurch gekennzeichnet, dass** die Menge des Laufflächenmaterials durch den Abstand zwischen dem oberen Endlosband (4) und dem unteren Endlosband (9) bestimmt wird.

15. Verfahren nach Anspruch 13 **dadurch gekennzeichnet, dass** die Menge des Laufflächenmaterials aus dessen Zusammensetzung und der daraus folgenden Kompressionsfähigkeit bestimmt wird.
